Europäisches Patentamt

European Patent Office

Office européen des brevets

(19)

(11) Publication number: **0 249 645 B1**

(12) **EUROPEAN PATENT SPECIFICATION**

(45) Date of publication of patent specification: **28.08.91**  (51) Int. Cl.⁵: **G02F 1/015, H01S 3/08**

(21) Application number: **86108263.4**

(22) Date of filing: **18.06.86**

(54) Optoelectronic voltage-controlled modulator.

(43) Date of publication of application:
**23.12.87 Bulletin 87/52**

(45) Publication of the grant of the patent:
**28.08.91 Bulletin 91/35**

(84) Designated Contracting States:
**DE FR GB IT**

(56) References cited:
**WO-A-84/03397**
**WO-A-84/03397**
**FR-A- 1 603 131**

**JAPANESE JOURNAL OF APPLIED PHYSICS.
SUPPLEMENTS 17TH CONF. ON SOLID-
STATE DEVICES AND MATERIALS, 25th-27th
August 1985, pages 91-94, Tokyo, JP; A.
AJISAWA et al.: "Electric field induced ab-
sorption changes in InGaAsP/InP multi-
quantum well"**

**"Applied Optics and Optical Engineering"
ed. by Rudolf Kingslake, Vol. 1, Academic
Press New York, pp 299-313**

(73) Proprietor: **International Business Machines
Corporation
Old Orchard Road
Armonk, N.Y. 10504(US)**

(72) Inventor: **Meier, Heinz Peter
Langruetistrasse 1
CH-8800 Thalwil(CH)**
Inventor: **Harder, Christoph Stephan
Renggerstrasse 66
CH-8038 Zürich(CH)**

(74) Representative: **Schröder, Otto H., Dr. Ing. et
al
IBM Corporation Säumerstrasse 4
CH-8803 Rüschlikon(CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to an optoelectronic voltage-controlled modulator for the external modulation of a light beam.

Optical light wave communications have become increasingly important in recent years for both, telecommunication and data transfer within data processing systems. Optical signals, representative of data to be transmitted, are generated, modulated, transmitted and detected before they are applied to electronic circuitry for processing. One of the important elements of such optical systems is the modulator that is used to modulate the light beam, normally a laser beam, with the data to be transmitted.

For applications in modern systems, a modulator should meet at least the following requirements: it should permit reliable, low power dissipation, high-speed operation and high package densities, and, probably even more important, the modulator should be compatible with the wavelength and the power of the light sources used in the system, such as lasers or light-emitting diodes, and with the voltage levels, materials and manufacturing technologies of the associated semiconductor electronic devices and circuitry.

The earlier "classical" modulators, that were based on interference and phase shift phenomena, don't match today's requirements, particularly with regard to the compatibility with the electronic circuit technologies.

More recently proposed modulator designs, compatible with semiconductor technology, are based on either one of the following concepts: internal modulation of the light source itself, or use of an external, non-reflecting modulator with the light beam passing through the device.

The internal light source modulation has limited possibilities particularly with regard to power and application flexibility. A separate light source, providing an unmodulated light beam, has the advantage that it can be placed in a less critical environment, it can, e.g., be cooled, and it can serve as a light power source for a plurality of light channels - very much like a voltage- or current-source in electronic circuitry systems.

External, non-reflecting modulators overcome these disadvantages but raise "packaging" problems in that the device has to be accessible at both sides since light beam input and output are at opposite surfaces of the modulator structure. At least equally important is the further disadvantage encountered with these devices, that they require complex manufacturing processes in order to remove the opaque semiconductor substrate on which the modulator structure is grown.

These drawbacks are avoided by the external, reflective modulator of the present invention.

The modulator hereinafter proposed can be fabricated by employing new methods such as molecular beam epitaxy (MBE) or metal-organic chemical vapor deposition (MOCVD).

These methods have been developed during the last decade to a point where they allow the fabrication of layered structures with layer thicknesses ranging from a few tenths of a nm to a few $\mu$m. The resulting artificial media exhibit novel properties not observed in bulk material of the parent compounds. Structures, consisting of stacks of alternating ultra-thin layers tailored for specific applications, are usually referred to as superlattices or quantum well structures. They provide for a wide variety of devices for use in present or potential future optoelectronic systems, including, e.g., short pulse light sources, photodetectors, optical gates, and modulators.

Very suitable in this technique are compound III-V semiconductors, such as GaAs, that have the basic properties necessary for the fabrication of superlattices or quantum well structures. They have a direct band gap, i.e., they are very efficient absorbers and emitters. And, most important, these materials can form various solid solutions with identical crystal structures and well-matched lattice parameters but with different energy gaps and refractive indices. This compatibility of various III-V compounds permits the growth of the desired multi-layer heterostructures involving two or more compounds.

The following publications are representative of the present state of the art:

A. "Semiconductor Superlattices and Quantum Wells" by L. Esaki (Proc. 17th Int. Conf. on the Physics of Semiconductors, San Francisco, August 1984, p. 473-483).

This chapter provides a survey of significant milestones of the research of superlattices and quantum wells over the past fifteen years.

B. "Quantum Wells for Photonics" by D.S. Chemla ("Physics Today", May 1985, p. 57-64).

The basic optoelectric properties of superlattices and quantum well structures are discussed. The article also describes some recent research work resulting in proposals for potential applications of such structures. One proposal concerns an optical modulator which is of the external, non-reflecting type referred to above. It is formed by a reverse-biased p-i-n diode with a quantum well optical modulator. The beam passes through the device from top to bottom, i.e. the semiconductor substrate on which the layered structure is grown needs to be removed.

C. "Novel Optical Modulators and Bistable Devices Using the Self Electro-Optic Effect in Semiconductor Quantum Wells" by D.A.B. Miller (Collected Papers of 2. International Conference on Modulated Semiconductor Structures, Kyoto, Sept. 1985, p. 459-466).

This paper addresses GaAs/GaAlAs quantum well structures, summarizes the physical mechanism and explains the operating principles of the devices. One of the described devices is a modulator consisting of 50 periods of GaAs wells separated by GaAlAs barriers. The light beam passes perpendicular through the layers that are deposited on a GaAs substrate. Again, the substrate has to be etched away underneath the multi-layer structure.

D. "The Potential of n-i-p-i Doping Superlattices for Novel Semiconductor Devices" by G.H. Doehler (Superlattices and Microstructures, Vol. 1, No. 3, 1985, p. 279-287).

In this chapter, a number of device applications of n-i-p-i doping superlattices are suggested. A modulator is shown that consists of a superlattice where the light is propagating in a direction parallel to the layers of a n-i-p-i crystal entering the device at one side and leaving it, modulated, at the opposite side.

E. "New Long-Wavelength Photodetector Based on Reverse-Biased Doping Superlattices" by Y. Horikoshi et al. (Appl. Phys. Lett. 45 (9), November 1, 1984, p. 919-921).

This article describes a photoconductive detector of low capacitance and with high sensitivity in the 0.8-1.4 $\mu$m wavelength range which has been fabricated from GaAs doping superlattices grown by MBE. The disclosed reverse-biased device configuration could, in principle, also be attractive for other optoelectronic devices.

F. PCT Application WO 85/03171 "Laser controlled by a multiple-layer Heterostructure".

This patent application discloses an active laser device emitting a light beam of controllable intensity. The structure comprises a diode laser arranged in an optical resonator together with a multi-layer absorber that is used to control the overall gain of the optical resonator. Internal modulation of the emitted beam can be achieved by applying electric fields to the absorber.

These references provide the necessary technological background for carrying out the present invention but the structures described are not based on and do not suggest in any way the novel concept on which the modulator provided by the invention is based.

It is the main object of the invention to provide a high-speed, external light beam modulator that is compatible with modern semiconductor technologies and with the characteristic properties of the optoelectronic devices used in optical data transmission systems.

Another object is to provide a reflective modulator that simplifies packaging in that light beam input and output are at the same side of the device.

A further object is to provide a modulator structure that can be fabricated using currently available reliable and controllable processes.

The invention is defined in claim 1 and is intended to meet the above objectives and to remedy the drawbacks encountered with hitherto known devices. This is accomplished by providing a single structure comprising a reflector, and, on top of it, a switchable absorber. The intensity of a light beam that passes the absorber twice, i.e., before and after being reflected at the reflector, can be modulated by control signals applied to the absorber.

In a preferred embodiment, the modulator consists of a heterogen multi-layer structure that is epitaxially grown on a semiconductor substrate such as GaAs.

The main advantages offered by the invention are:

- The modulator is compatible with the other optoelectronic or electronic elements of the optical system in which it is used; hence it can be manufactured employing the same processes that are used for the other elements.
- The light beam is reflected within the device, i.e., the modulator provides for simplified manufacturing and packaging.
- The modulator is separated from the light source allowing the latter to be placed in a less critical environment, thus providing for more efficient and less critical operating conditions.

One way of carrying out the invention is described in detail below with reference to the accompanying drawings which illustrate a specific embodiment and in which

    Fig. 1      is a schematic illustration of the basic elements of the inventive modulator structure,

    Fig. 2      is a schematic diagram of an optical interconnection in which the inventive modulator is employed,

    Fig. 3      is a cross-sectional representation of an embodiment of the inventive modulator,

    FIG. 4      shows a plot of the reflectivity R of the reflector used in the inventive modulator structure as a function of the wavelength of the reflected light, and

    Fig. 5      shows the relationship between the modulator output and the control voltage $V_c$ that is applied to modulate the light beam passing the modulator.

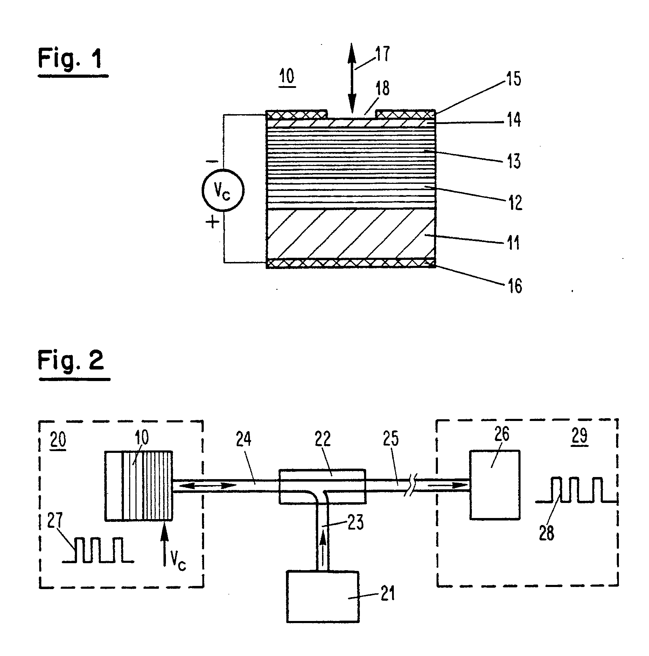

Referring now to the drawings in more detail, and first to Fig. 1 thereof, there is shown a schematic illustration of the basic structure of the inventive modulator 10 which, functionally, can be described as a mirror with a reflectivity that can be modulated with applied electric signals.

The modulator 10 consists of an optical absorber 13 and a buried reflector 12 underneath, both being formed on a substrate 11 which may consist of gallium arsenide (GaAs). Control voltages $V_c$, that determine the degree of absorption in the absorber 13, are applied to contacts 14/15 and 16 that are provided at the top and the bottom of the device. Patterned contact 15 on top of the structure defines a window 18 through which a light beam 17, that is received from an outside source as indicated by the double arrow, enters the device. The light beam passes the absorber 13 twice, i.e., before and after its reflection at the reflector 12. The degree of intensity reduction in the absorber portion 13 depends on the applied control voltage $V_c$.

The light beam 17, leaving the device through window 18, is thus modulated in accordance with the applied $V_c$ signals which could be representative of binary data. In the ideal case, the ratio of the beam intensities of the outgoing and the incoming light beams is "switched" in the modulator between 0 and 1.

In the embodiment of the modulator that is schematically represented in Fig. 1, the structure is epitaxially grown on a GaAs substrate 11. The structure consists of a sequence of ultra-thin layers of two or more semiconductor compounds such as GaAs and GaAlAs that are periodically grown one on another to form superlattices or quantum well structures. The bandgap of the semiconductor material is chosen such that the light does not get absorbed anywhere but in the optical modulator section 13 of the device.

The reflector 12 comprises a number of layer periods each consisting of two layers having a different index of refraction but each with an optical thickness of a quarter wavelength ($\lambda/4$). This superlattice structure provides, for the light beam wavelength for which it is optimized, an almost ideal (100%) reflector.

The optical absorber 13, grown on top of the reflector 12, can be formed by a quantum well structure also consisting of a sequence of different compound semiconductor layers. The optical transmission of this absorber structure depends on control voltages $V_c$ which are applied to n- and p-type contacts 16 and 14, respectively. In operation, a bias voltage $V_{BIAS}$ is applied to these contacts to operate the device in a reverse-biased mode.

The modulator illustrated in Fig. 1 is "reflective" in that in- and out-going light beams pass through the same window, and it is "external" to the source of the light beam that is to be modulated. The invention thus provides for a device that is well suited for a wide variety of applications in optical systems. As an example, an optical interconnection between an emitter and a receiver will be briefly described with the aid of Fig. 2. In this figure, the modulator of Fig. 1 is again designated 10. The arrow $V_c$ represents the control voltage input terminal of the device.

The purpose of the interconnect system of Fig. 2 is to transmit data originating at an emitter or data source 20 to a receiving station 29. The pulse sequences 27 and 28 are shown to illustrate the data to be sent and to be received, respectively.

In the system of Fig. 2, a light beam source 21, e.g., a laser providing a beam of appropriate wavelength, emits a light pulse that reaches the modulator 10 via an optical fiber 23, an optical directional coupler 22 and a further fiber 24 as indicated by the arrows. In the modulator 10, the light intensity of the beam is modulated in accordance with the data signals 27 applied as control signals $V_c$ and retransmitted via fiber 24, coupler 22 and fiber 25 to the receiving station 29. Here, the incoming light pulses are received by a light sensitive sensor, such as an optoelectronic photodetector, and, if necessary, restored to regenerate the data signal stream 28.

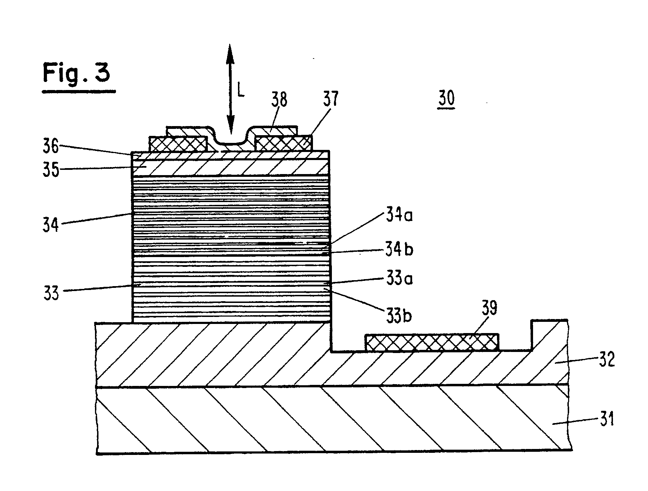

Fig. 3 shows a detailed cross-sectional representation of an embodiment 30 of the inventive modulator. The device shown basically comprises the structural elements already described in connection with the conceptual structure illustrated in Fig. 1.

A semi-insulating (Si) GaAs substrate 31 forms the basis on which the device is deposited. This substrate is covered with a n$^+$ GaAs buffer layer 32 having a thickness of 1 to 3 $\mu$m. It serves to provide a surface that is properly conditioned for the deposition of the ultra-thin alternate layers of the reflector structure 33. Reflector 33 consists, in the embodiment here described, of a sequence of 15 periods of alternate pairs of AlAs and $Ga_xAl_{(1-x)}As$ layers designated 33a and 33b, respectively.

The reflector structure corresponds to that of known $\lambda/4$-reflectors in which the optical thickness d of the subsequent layers 33a and 33b need to equal $\lambda/4$, i.e., a quarter of the wavelength of the light beam used. The required layer thicknesses d can be derived from

$$d = \frac{\lambda}{4} \cdot \frac{1}{n}$$

with

$\lambda$ = wavelength of light beam

n = refractive index of the layer material

For a wavelength $\lambda$ of 0.8 $\mu$m and indices n = 3.0 for AlAs and n = 3.55 for $Ga_{0.9}Al_{0.1}As$ one obtains for the AlAs layers 33a: d = 70.8 nm, and for the $Ga_{0.9}Al_{0.1}As$ layers 33b: d = 59.9 nm.

The total thickness $d_R$ of the stack of 15 periods forming the reflector then equals about

$$d_R = 15 \times (70.8 + 59.9) \text{ nm} = \text{about } 2 \ \mu\text{m}.$$

In the embodiment of Fig. 3, the absorber 34 is deposited on top of the reflector structure. The absorber 34 consists of a sequence of 100 periods of thin alternating GaAs (34a) and $Ga_{0.7}Al_{0.3}As$ (34b) layers of 9.5 nm and 11 nm thickness, respectively. The GaAs layers form quantum wells which are separated by the GaAlAs layers.

Deposited on the upper surface of the absorber structure are p-type $Ga_{0.9}Al_{0.1}As$ contact layers 35 and 36 of 150 nm and 50 nm thickness, respectively. The doping of $p^+$ layer 35 is about $5 \cdot 10^{17}$ to $2 \cdot 10^{18}$ $cm^{-3}$ whereas the doping of the heavier doped $p^{++}$ layer 36 is about $10^{20}$ $cm^{-3}$. Electrical contact to these layers is provided by patterned, ring-shaped metallization 37 consisting of a Ti-Pt-Au layer of about 200 nm thickness. This metal layer defines the window of the modulator through which both, the incoming as well as the reflected light beam pass. This is illustrated by double arrow L. For proper optical fiber connections the window diameter is 50 to 100 $\mu$m.

The chosen thicknesses and p-doping concentrations of the contact layers 35 and 36 result in a low resistance ohmic contact with the metal layer 37 and in a sufficiently uniform distribution of the electric field, that is created by voltage signals applied to the metal layer, over the whole cross-section of the modulator structure.

The device is topped with an antireflection coating 38 consisting of $Si_3N_4$ and having a thickness of about 100 nm which corresponds to the optical thickness of $\lambda/4$. This coating serves, in a well known manner, to reduce the reflection that would otherwise occur at the fiber-semiconductor interface.

In the device illustrated in Fig. 3, the n-contact 39 is formed on the surface of a groove provided in buffer layer 32. Contact 39 consists of an Au-Ge-Ni-Au layer of 80 nm thickness which, upon deposition, is alloyed (for 1 min. at 430 °C) to form a low resistance ohmic contact with the semiconductor material.

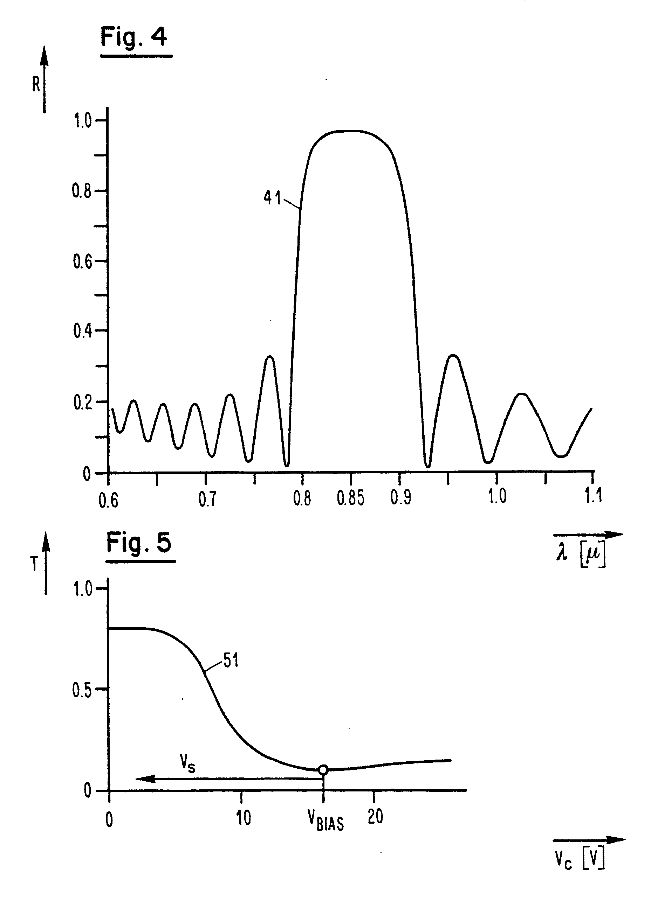

In Fig. 4 the reflectivity R of the reflector 33 of the modulator of Fig. 3 is plotted versus the wavelength $\lambda$ of the light beam used. It shows that, for wavelength of $\lambda$ = 0.85 $\mu$m, the reflectivity

reaches the value of 0.97, i.e., 97% of the light arriving at the reflector 33 after passing through the absorber 34 are reflected back - to once more pass through the absorber.

The diagram of Fig. 5 illustrates the operational characteristics of the modulator described above in connection with Fig. 3. Curve 51 shows, for the modulator that consists of the absorber 34 and the reflector 33, the transmission coefficient T plotted as a function of the voltage $V_c$ applied between p- and n-type contacts 37 and 39, respectively, where the transmission T is defined as the ratio of the intensities of the outgoing and the incoming light beam. In operation, a bias voltage $V_{BIAS}$ is applied placing the absorber 34 in a reverse-biased condition. With a bias $V_{BIAS}$ as indicated in the diagram of Fig. 5, and with no data voltage signal $V_s$ applied to the contacts 37 and 39, the light output of the modulator in response to an incoming light beam is very low, i.e., in the order of 10%.

As soon as a signal $V_s$ of proper magnitude and polarity is applied to the contacts, where it is superimposed with the bias voltage $V_{BIAS}$, the output intensity increases to about 80% of that of the incoming light beam. It follows, that the described modulator provides for a sufficiently high signal to noise ratio operation making the device well-suited for use, e.g., as a switch, in optical data transfer systems.

The modulator structure hereinbefore described can be fabricated using technologies that are available and applying the knowledge and understanding disclosed in the art which is represented by the publications referred to in the introduction of the specification. Particularly, the molecular beam epitaxy (MBE) and the metal-organic chemical vapor deposition (MOCVD) processes have been developed to a point where the required ultra-thin layer structures can be produced in a single run, i.e., in the same vacuum without great difficulties and with sufficient accurateness, reliability and reproducibility. The other layers and elements of the described modulator structure can be fabricated using evaporation or epitaxy techniques, masking, patterning and etching processes that are well known in the art.

The modulator structure of Fig. 3 represents only an example of a device in which the inventive concept, that has been described more generally in connection with Fig. 1, is implemented. Alternative structures, still based on the inventive concept, can be designed to serve particular requirements, e.g., by choosing different semiconductor materials, by using different dimensions and doping concentrations, or by changing the electrical contact and the optical interface design.

For instance, the modulator may be structured to receive and to modulate not only light beams arriving on a single optical fiber but it may be extended to also handle multiple parallel beams arriving on a plurality of fibers. Matrix arrangements that may be advantageous, e.g., for picture processing applications, are also conceivable.

In another alternative design, the absorber 34 may consist of a so-called n-i-p-i doping superlattice structure rather than the quantum well arrangement that is used in the described embodiment.

Also, the n-contact 39, in Fig. 3 arranged beside the multi-layer stack that comprises the reflector 33 and the absorber 34, may be placed underneath the substrate 31 thus providing a simple structure, but abandoning certain packaging advantages inherent to a planar, mesa-type structure that can be fabricated on the same substrate as associated electronic circuitry.

Structural details may of course be changed as well. As an example, a thin patterned insulating layer (e.g. SiO$_2$ of 100 nm thickness) may be deposited underneath the n-contact metal layer 37 in order to reduce the capacitance and thereby to improve the high speed performance of the device.

## Claims

1.  Optoelectronic voltage-controlled modulator for modulating an incident light beam from an external source, comprising
    - a semiconductor substrate (31),
    - a stack of parallel semiconductor layers (33, 34) epitaxially grown on one surface of said substrate, the stack forming a reflector structure (33) and, deposited thereon, an absorber structure (34), both structures consisting of a plurality of pairs of alternate layers (33a, 33b; 34a, 34b) of different semiconductor compounds forming a superlattice, and
    - contacts (37, 39) for the application of electric control signals by means of which an electric field can be created within the absorber structure (34) that is substantially uniformly distributed over the whole cross section of the stack and suited to modulate a light beam (L) incident upon the absorber structure before and after being reflected at the reflector, a first of said contacts (37) being arranged on top of the absorber structure (34), a second contact (39) being connected to said semiconductor substrate (31).

2.  A modulator as claimed in claim 1, wherein the optical thicknesses of said alternate layers (33a, 33b) forming said reflector structure (33) equal a quarter wavelength of the light beam that is to be modulated.

3.  A modulator as claimed in claim 2, wherein the wavelength of the light beam is between 0.8 and 0.9 $\mu$m.

4.  A modulator as claimed in claim 1, wherein said alternate layers (33a, 33b) forming said reflector structure (33) consists of AlAs and GaAlAs, respectively.

5.  A modulator as claimed in claim 1, wherein said pairs of layers forming said absorber structure comprise a first layer (34a) forming a quantum well, and a second layer (34b) forming a separating barrier between subsequent quantum well layers.

6.  A modulator as claimed in claim 5, wherein said quantum well layers (34a) and said barrier layers (34b) consist of GaAs and GaAlAs, respectively.

7.  A modulator as claimed in claim 1, wherein said substrate (31) consists of semi-insulating GaAs and is covered with a doped GaAs buffer layer (32) that provides the surface on which said stack of semiconductor layers (33, 34) is grown.

8.  A modulator as claimed in claim 1, wherein said first contact (37) is ring-shaped to define a window for the passage of the incoming and the reflected light beams (L).

9.  A modulator as claimed in claim 1, wherein said second contact (39) is arranged on said semiconductor substrate surface besides the stack of layers forming the reflector (33) and absorber (34) structures.

10. A modulator as claimed in claim 1, wherein said second contact (39) is arranged at the surface of said semiconductor substrate (31) that is opposite said substrate surface on which the stack of semiconductor layers (33, 34) is grown.

11. A modulator as claimed in claim 1, wherein an antireflection coating (38) of a thickness that equals a quarter wavelength of the light beam to be modulated is deposited on top of said absorber structure (34).

## Revendications

1.  Modulateur opto-électronique à commande en tension pour moduler un faisceau lumineux incident venant d'une source externe, comprenant :

un substrat semi-conducteur (31),

un empilage de couches semi-conductrices parallèles (33,34) épitaxialement engendrées sur une surface dudit substrat, l'empilage formant une structure de réflecteur (33) et, déposée sur celle-ci, une structure d'absorbeur (34), les deux structures consistant en une pluralité de paires de couches alternées (33a, 33b; 34a, 34b) de composés semi-conducteurs différents définissant un super-réseau, et

des contacts (37, 39) pour l'application de signaux de commande électriques au moyen desquels on peut créer, dans la structure d'absorbeur (34), un champ électrique qui est réparti sensiblement uniformément dans toute la section transversale de l'empilage et qui convient pour moduler un faisceau lumineux (L) incident sur la structure d'absorbeur avant et après sa réflexion par le réflecteur, un premier desdits contacts (37) étant formé sur le dessus de la structure d'absorbeur (34) et un deuxième contact (39) étant connecté audit substrat semi-conducteur.

2. Modulateur suivant la revendication 1, dans lequel les épaisseurs optiques desdites couches al`ternées (33a, 33b) constituant ladite structure de réflecteur (33) sont égales à un quart de la longueur d'onde du faisceau lumineux qui doit être modulé.

3. Modulateur suivant la revendication 2, dans lequel la longueur d'onde du faisceau lumineux est comprise entre 0,8 et 0,9 $\mu$m.

4. Modulateur suivant la revendication 1, dans lequel les dites couches alternées (33a, 33b) formant ladite structure de réflecteur (33) sont en AlAs et GaAlAs, respectivement.

5. Modulateur suivant la revendication 1, dans lequel les dites paires de couches formant ladite structure d'absorbeur comprennent une première couche (34a) constituant un puits quantique et une deuxième couche (34b) constituant une barrière de séparation entre les couches de puits quantiques successives.

6. Modulateur suivant la revendication 5, dans lequel lesdites couches de puits quantiques (34a) et lesdites couches de barrières (34b) sont en GaAs et GaAlAs, respectivement.

7. Modulateur suivant la revendication 2, dans lequel ledit substrat (31) est en GaAs semi-isolant et il est recouvert d'une couche tampon en GaAs dopé (32) qui forme la surface sur laquelle ledit empilage de couches semi-conductrices (33,34) est développé.

8. Modulateur suivant la revendication 1, dans lequel ledit premier contact (37) est annulaire, de manière à définir une fenêtre pour le passage des faisceaux lumineux (L) entrant et réfléchi.

9. Modulateur suivant la revendication 1, dans lequel ledit deuxième contact (39) est placé sur la surface dudit substrat semi-conducteur, à côté de l'empilage de couches constituant les structures de réflecteur (33) et d'absorbeur (34).˙

10. Modulateur suivant la revendication 1, dans lequel ledit deuxième contact (39) est placé à la surface dudit substrat semi-conducteur (31) qui est opposée à ladite surface de substrat sur laquelle est engendré l'empilage de couches semi-conductrices (33,34).

11. Modulateur suivant la revendication 1, dans lequel un revêtement anti-réflexion (38), d'épaisseur égale à un quart de longueur d'onde du faisceau lumineux à moduler, est déposé sur le dessus de ladite structure d'absorbeur (34).

**Patentansprüche**

1. Optoelektronischer, spannungsgesteuerter Modulator zum Modulieren eines aus einer äußeren Quelle einfallenden Lichtstrahls, der folgendes aufweist:
   - ein Halbleitersubstrat (31),
   - einen Stapel paralleler Halbleiterschichten (33, 34), die auf einer Oberfläche des Substrats epitaktisch gebildet sind, wobei der Stapel eine Reflektorstruktur (33) und eine darauf aufgebrachte Absorberstruktur (34) bildet, beide Strukturen aus einer Mehrzahl von Paaren abwechselnder Schichten (33a, 33b; 34a, 34b) aus verschiedenen Halbleiterverbindungen, die eine Superlattice-Struktur bilden, bestehen, und
   - Kontakte (37, 39) zum Anlegen elektrischer Steuersignale mittels welcher ein elektrisches Feld innerhalb der Absorberstruktur (34) erzeugt werden kann, das im wesentlichen gleichmäßig über den ganzen Querschnitt des Stapels verteilt ist und geeignet ist, einen Lichtstrahl (L) zu modulieren, der auf die Absorberstruktur fällt, bevor und nachdem er an dem Reflektor reflektiert wird, wobei ein erster der Kontakte (37) auf dem oberen Teil der Absorberstruktur (34) angeordnet ist und ein zweiter Kontakt (39) mit dem Halbleitersubstrat (31) verbunden ist.

2. Modulator nach Anspruch 1, bei welchem die optische Dicke der abwechselnden, die Reflektorstruktur (33) bildenden Schichten (33a, 33b) gleich einer Viertel-Wellenlänge des zu modulierenden Lichtstrahles ist.

3. Modulator nach Anspruch 2, bei welchem die Wellenlänge des Lichtstrahles zwischen 0,8 und 0,9 $\mu$m liegt.

4. Modulator nach Anspruch 1, bei welchem die die Reflektorstruktur (33) bildenden abwechselnden Schichten (33a, 33b) aus AlAs bzw. GaAlAs bestehen.

5. Modulator nach Anspruch 1, bei welchem die Paare von die Absorberstruktur bildenden Schichten eine erste, eine Quantenmulde bildende Schicht (34a), und eine zweite, eine trennende Barriere zwischen aufeinanderfolgenden Quantum-Well-Schichten bildende Schicht (34b) aufweist.

6. Modulator nach Anspruch 5, bei welchem die Quantum-Well-Schichten (34a) und die Barriere-Schichten (34b) aus GaAs bzw. GaAlAs bestehen.

7. Modulator nach Anspruch 1, bei welchem das Substrat (31) aus halbisolierendem GaAs besteht und mit einer dotierten GaAs-Zwischenschicht (32) überdeckt ist, welche die Oberfläche liefert, auf welcher der Stapel von Halbleiterschichten (33, 34) durch Aufwachsen angebracht ist.

8. Modulator nach Anspruch 1, bei welchem der erste Kontakt (37) ringförmig ist, um ein Fenster für den Durchtritt der einfallenden und der reflektierten Lichtstrahlen (L) zu definieren.

9. Modulator nach Anspruch 1, bei welchem der zweite Kontakt (39) auf der Halbleitersubstratoberfläche neben dem Stapel der die Reflektor (33) - und Absorber (34) - Strukturen bildenden Schichten angeordnet ist.

10. Modulator nach Anspruch 1, bei welchem der zweite Kontakt (39) auf der Oberfläche des Halbleitersubstrates (31) angeordnet ist, die jener Substratoberfläche gegenüberliegt, auf welcher der Stapel von Halbleiterschichten (33, 34) durch Aufwachsen angebracht ist.

11. Modulator nach Anspruch 1, bei welchem ein AntireflexBelag (38) einer Dicke, die gleich eine Viertel-Wellenlänge des zu modulierenden Lichtstrahls ist, auf dem oberen Teil der Absorberstruktur (34) aufgebracht ist.

Fig. 1

Fig. 2

## Fig. 3

## Fig. 4

## Fig. 5